Europäisches Patentamt

European Patent Office

Office européen des brevets

(19)

(11) **EP 0 906 847 A2**

(12) **EUROPÄISCHE PATENTANMELDUNG**

(43) Veröffentlichungstag:
  **07.04.1999  Patentblatt 1999/14**

(51) Int. Cl.⁶: **B60L 11/18**, B60L 15/20

(21) Anmeldenummer: 98118321.3

(22) Anmeldetag: **28.09.1998**

(84) Benannte Vertragsstaaten:
  **AT BE CH CY DE DK ES FI FR GB GR IE IT LI LU
  MC NL PT SE**
  Benannte Erstreckungsstaaten:
  **AL LT LV MK RO SI**

(30) Priorität: **02.10.1997 DE 19743757
     26.08.1998 DE 29815331  U**

(71) Anmelder:
  **SIEMENS AKTIENGESELLSCHAFT
  80333 München (DE)**

(72) Erfinder:
  • **Albert, Michael, Dipl.-Ing.
    97836 Bischbrunn (DE)**
  • **Rauch, Martin, Dipl.-Ing.
    97276 Margetshöchheim (DE)**

(54) **Antriebsvorrichtung für ein Elektrofahrzeug**

(57)    Zum Batterieschutz und zur Reichweitenoptimierung einer Antriebsvorrichtung mit einer an eine Batterie (B) über einen Umrichter (U) anschließbaren permanenterregten Synchronmaschine (M) ist der Umrichter (U) jeweils im Leerlauf-Betrieb der Synchronmaschine (M) nur bei Gefahr eines unkontrollierten Stromflusses in die Batterie (B) im Sinne einer Anpassung der induzierten Rückspeise-Gleichspannung ($U_{ZW}$) der Synchronmaschine (M) an die Batteriespannung ($U_B$) durch einen entsprechenden eingeprägten Magnetisierungsstrom für die Synchronmaschine (M) aktiviert; zur Reaktivierung ist eine feldorientierte Regelung vorgesehen.

**Beschreibung**

Die Erfindung betrifft eine Antriebsvorrichtung für ein Elektrofahrzeug gemäß Patentanspruch 1; eine derartige Antriebsvorrichtung findet Anwendung sowohl in Fahrzeugen mit alleinigem Elektromotorantrieb als auch in Hybridfahrzeugen mit wechselweisem bzw. parallelem Antrieb durch einen Elektromotor bzw. durch eine Verbrennungsmaschine.

Bei derartigen Fahrzeugen treten Betriebsbedingungen auf, in denen dem Antrieb durch den Elektromotor keine Leistung abverlangt wird und somit die Sollwertvorgabe für den Motorstrom gleich Null ist; Beispiele für einen derartigen Leerlaufbetrieb ist z.B. der sogenannte Schiebebetrieb des Fahrzeuges ohne Nachbildung eines Schleppmomentes oder z.B. das Mitlaufen des Elektromotors beim Parallelantrieb mit der Verbrennungsmaschine in Hybridfahrzeugen, bei dem der Elektromotor durch seine starre Ankopplung mitangetrieben wird. Es ist üblich, bei derartigen Betriebsbedingungen den Umrichter zu aktivieren und im Sinne von solchen aus der Batterie gespeisten Motorphasenströmen zu regeln, daß der Elektromotor kein Drehmoment abgibt.

Aufgabe vorliegender Erfindung ist eine Reichweitenoptimierung für ein Elektrofahrzeug mit aus einer Batterie speisbarem Elektromotor durch geringere betriebsmäßige Belastung dieser Batterie. Die Lösung dieser Aufgabe gelingt durch eine Antriebsvorrichtung gemäß Patentanspruch 1; vorteilhafte Ausgestaltungen der Erfindung sind jeweils Gegenstand der Unteransprüche.

Durch die erfindungsgemäße Antriebsvorrichtung kann in vorteilhafter Weise zumindest in Teilbereichen des Leerlaufbetriebes des Elektromotors durch das erfindungsgemäße Sperren der Leistungsschalter aufgrund der Inaktivierung des Umrichters auf eine Endladebelastung der Batterie zum Zwecke einer Einregelung eines Null-Drehmomentes mit entsprechender Taktung der Motorphasenströme verzichtet werden.

Die Sperrung der Leistungsschalter bei den vorgenannten Bedingungen ist bei Elektrofahrzeugen mit Elektromotoren mit veränderlichem Feld, d.h. insbesondere bei Asynchronmaschinen bzw. fremderregten Synchronmaschinen, in vorteilhafter Weise über den gesamten Drehzahlbereich möglich.

Beim Betrieb eines Elektrofahrzeugs mit einer hinsichtlich einfachem Aufbau besonders vorteilhaften Synchronmaschine mit permanenterregtem Rotor kann durch die erfindungsgemäße Antriebsvorrichtung darüber hinaus ein unkontrollierter, gegebenenfalls zur Schädigung der Batterie führender Stromfluß zu der Batterie für den Fall verhindert werden, daß die vom Permanentmagnet-Läuferfluß induzierte Klemmenspannung der Synchronmaschine, insbesondere bei Betrieb im Feldschwächebereich, zu hoch wird und damit die gleichgerichtete Rückspeise-Gleichspannung bzw. Zwischenkreisspannung am batterieseitigen Ausgang des Umrichters die parallel liegende Batteriespannung unzulässig übersteigt. Die erfindungsgemäße Vorrichtung erlaubt somit mit schaltungstechnisch besonders geringem Aufwand eine Reichweitenoptimierung bei gleichzeitigem Batterieschutz im Falle einer Antriebsvorrichtung mit Verwendung einer permanenterregten Synchronmaschine als elektrischem Antriebsteil.

Für ein in jedem Fall gewährleistetes ruckfreies Beschleunigen bzw. Bremsen mit entsprechender Drehmomentvorgabe aus einem vorherigen Leerlaufzustand der Synchronmaschine ohne Drehmomentanforderung und mit dementsprechend gesperrten Leistungsschaltern ist eine Reaktivierung der Leistungsschalter mit entsprechender feldorientierter Regelung des Spannungszeigers für die Standerwicklung der Synchronmaschine entsprechend einer Stromsollwertvorgabe sowie unter Berücksichtigung von aus der Rotordrehzahl sowie der Rotorfeldlage berechenbaren augenblicklichen Maschinendaten vorgesehen.

Die Erfindung wird im folgenden anhand eines schematisch dargestellten Ausführungsbeispiels näher erläutert.

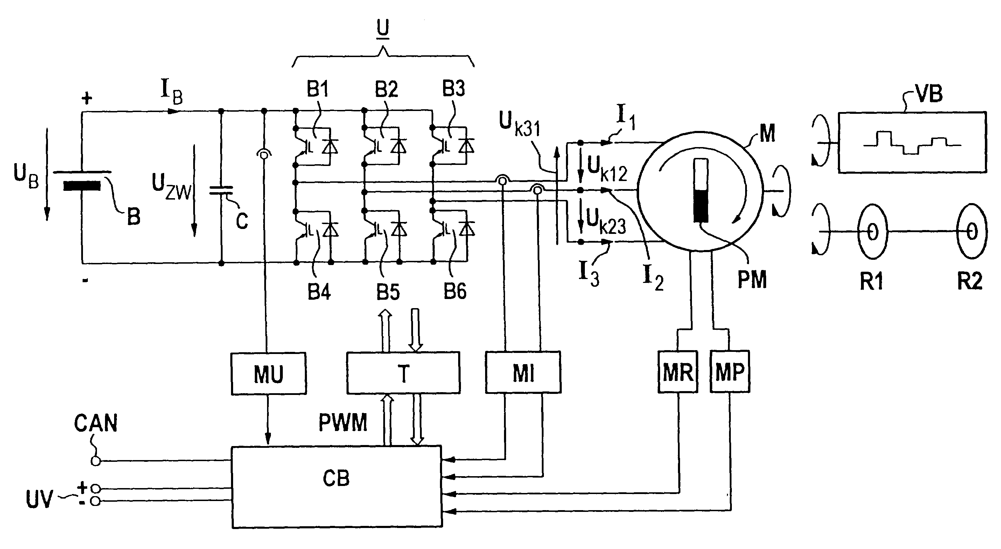

Die Zeichnung zeigt eine aus einer Battere B mit der Batteriespannung $U_B$ und dem Batteriestrom $I_B$ über einen Umrichter U mit parallelem Zwischenkreiskondensator C und mit sechs Leistungsschaltern B1-B6 in üblicher Drehstrombrückenschaltung gespeiste Synchronmaschine M mit permanentmagnetischem Rotor PM. Die permanenterregte Synchronmaschine M ist mit ihrer Ausgangswelle entweder wechselweise bzw. gleichzeitig starr kuppelbar an eine Verbrennungsmaschine VB bzw. an einen Fahrzeug-Radsatz R1/R2 eines Elektrofahrzeuges.

Die nachfolgenden Betrachtungen beziehen sich insbesondere auf den erfindungsgemäß gestalteten Leerlauf-Betrieb der Synchronmaschine, d.h. auf den Bereich, in dem der Sollwert für den drehmomentbildenden Motorstrom Null beträgt.

Die Leistungsschalter B1-B6 werden aktiviert und damit geregelt getaktet bzw. inaktiviert damit gesperrt über eine Steuereinheit CB, die über eine Endstufe T mit den Leistungsschaltern B1-B6 des Umrichters U in Steuer- bzw. Regelabhängigkeit steht. Der aus einer Gleichspannungsquelle UV gespeisten Steuereinheit CB werden über eine Strommeßvorrichtung MI die Motorströme $I_1;I_2;I_3$ der Synchronmaschine M, über eine Drehzahlmeßvorrichtung MR die Istwerte der Rotordrehzahl der Synchronmaschine M sowie über eine Spannungsmeßvorrichtung MU die am batterieseitigen Ausgang des Umrichters U anliegende Rückspeise-Gleichspannung bzw. Zwischenkreisspannung $U_{ZW}$ zugeführt.

Zur selbsttätigen Ermittlung des Betriebspunktes, bei dem in dem erfindungsgemäß betrachteten Leerlaufbetrieb von einer Inaktivierung der Leistungsschalter B1-B6 und damit dem Batterie-Entladungsschutz der Batterie B auf die Aktivierung der Leistungsschalter B1-B6 und damit den Batterie-Überladeschutz umgeschaltet wird, berechnet die Steuereinheit CB ausgehend von der Rotordrehzahl der Synchronmaschine M und dem bekannten Flußistwert der Synchronmaschine M die induzierten Motor-Klemmenspannungen $U_{K12}$;$U_{K23}$;$U_{K31}$ zwischen den Wicklungsklemmen der Synchronmaschine M; daraus wird die bei der Inaktivierung, d.h. Sperrung der Leistungsschalter B1-B6, durch deren Freilaufdioden gleichgerichtete Rückspeise-Gleichspannung bzw. Zwischenkreisspannung $U_{ZW}$, gegebenenfalls unter Berücksichtigung der Spannungsabfälle im Umrichter U, bestimmt. Übersteigt diese theoretische Zwischenkreisspannung $U_{ZW}$ die Batteriespannung $U_B$, könnte es zu einem unkontrolliertem Stromfluß $I_B$ von der Synchronmaschine M zu der Batterie UB kommen und Gefahr einer Beschädigung der Batterie B bestehen.

Alternativ zu der Erfassung der Rückspeise-Gleichspannung $U_{ZW}$ über eine gesonderte Spannungsmeßvorrichtung MU kann deren Wert auch aus einer externen Steuerung gewonnen und über ein Bussystem CAN an die Steuereinheit CB mitgeteilt werden.

Durch die erfindungsgemäß nunmehr sich einstellende Aktivierung der Leistungsschalter B1-B6 kann der permanenterregten Synchronmaschine M ein Magnetisierungsstrom mit derartiger Steuerung der Stromphasenlage eingeprägt werden, daß die induzierte Klemmenspannungen $U_{K12}$;$U_{K23}$;$U_{K31}$ und damit die Rückspeise-Gleichspannung bzw. Zwischenkreisspannung $U_{ZW}$ reduziert werden und ein unerwünschtes Rückladen der Batterie B vermeidbar ist. Trotz ansteigender Drehzahl und dabei ansonsten die Batteriespannung $U_B$ übersteigender Zwischenkreisspannung $U_{ZW}$ wird durch entsprechende Regelung des Magentisierungstromes erreicht, daß kein Strom $I_B$ in die Batterie B fließt und diese nicht überladen wird. Die dazu notwendige Erhöhung des Magnetisierungstromes ist gleichbedeutend mit einer Änderung der Stromphasenlage, d.h. der Phasenlage des Motorstroms gegenüber der induzierten Klemmenspannung der Synchronmaschine M. Die Aktivierung der Leistungsschalter B1-B6 erfolgt dabei gleichzeitig mit Vorgabe eines in Phasenlage und Amplitude definierten Spannungsvektors, derart daß Ausgleichsvorgänge im Antrieb vermieden werden.

Ab dem zuvor definierten Umschaltpunkt zwischen der Inaktivierung der Leistungsschalter einerseits und der Aktivierung der Leistungsschalter andererseits hat der Schutz der Batterie vor Überlast Vorrang vor deren Schutz vor Entladung; es dürfte ersichtlich sein, daß dadurch ein Optimum zwischen Batterieschutz einerseits und Batterieentladung andererseits durch einen möglichst weit ausgedehnten Bereich der Inaktivierung, d.h.Sperrung der Leistungsschalter, bei hohen Drehzahlen erreicht wird.

Soll der Leerlaufbetrieb der Synchronmaschine ohne Drehmomentanforderung und mit entsprechend inaktiviertem Umrichter verlassen werden und ist - z.B. zum Zwecke eines Beschleunigens aus dem Leerlauf-Fahrzustand des Elektrofahrzeuges - eine Reaktivierung vorgesehen, so sind nach einer Ausgestaltung der Erfindung durch eine Vorgabe eines entsprechenden feldorientiert geregelten Spannungszeigers $u_1$ für die Ständerwicklung der Synchronmaschine M in Abhängigkeit von deren augenblicklicher Rotordrehzahl und deren augenblicklicher Lage der Rotorfeldachse unzulässig hohe Ströme und damit unerwünschte Drehmomentstöße vermeidbar.

Die Einregelung des Betrages $|u_1|$ und des Winkels $\gamma_1$ des Spannungszeigers $u_1$ erfolgt zweckmäßigerweise durch Pulsweitenmodulation-Ansteuerung der Leistungsschalter B1-B6 entsprechend der an sich bekannten Raumzeigermodulation über die Steuereinheit CB mit entsprechenden Steuerausgängen PWM.

Der jeweils über die reaktivierten Leistungsschalter B1-B6 einzustellende, an die Maschinenklemmen der Synchronmaschine M anzulegende Spannungszeiger $u_1$ ist jeweils definiert in Abhängigkeit von einem z.B. durch die Stellung des Gaspedals vorgegebenen Stromsollwert sowie die jeweils augenblicklich, z.B. über einen Motor-Drehzahlgeber MR und einen Motor-Positionsgeber MP, erfaßten Werte der Rotordrehzahl $\omega_R$ sowie des Rotorfeldwinkels $\gamma_R$.

Der beim Reaktivieren der Leistungsschalter B1-B6 anzulegende Betrag $u_1$ des Spannungszeigers wird vorteilhaft aus einem abgespeicherten Modell der Synchronmaschine M bestimmt. Der Spannungsbetrag addiert sich aus der induzierten Spannung der Synchronmaschine und den Spannungsabfällen an Ständerwiderstand und Ständerinduktivität. Die induzierte Spannung der Maschine ergibt sich aus der Multiplikation der gemessenen Rotordrehzahl $\omega_R$ mit dem Rotorfluß $\Psi_{Rotor}$ und der Polpaarzahl p. Der Spannungsabfall am Ständerwiderstand wird berechnet durch Multiplikation von Ständerstromsollwert $i_{1soll}$ und Ständerwiderstand $R_1$. Der Spannungsabfall an der Ständerinduktivität ergibt sich durch Multiplikation von Ständerstromsollwert $i_{1soll}$, Ständerinduktivität $L_\sigma$ und elektrischer Drehfrequenz $\omega_1$. Vorteilhaft wird ein Maschinenmodell verwendet, das die Ständerspannungskomponenten in der d-Achse (feldbildende Achse) und in der q-Achse (drehmomentbildende Achse) vorteilhaft bestimmt.

$$u_{1q} = R_1 \cdot i_{1q\,soll} + L_\sigma \cdot \omega_1 \cdot i_{1d\,soll} + \omega_R \cdot p \cdot \Psi_{Rotor}$$

$$u_{1d} = R_1 \cdot i_{1d\,soll} + L_\sigma \cdot \omega_1 \cdot i_{1q\,soll}$$

Der Betrag der Ständerspannung ergibt sich dann aus den beiden, zuvor definierten Komponenten $u_{1q}$ bzw. $u_{1d}$ wie folgt

$$|u_1| = \sqrt{u_{1q}^2 + u_{1d}^2}$$

Der beim Reaktivieren der Leistungsschalter B1-B6 anzulegende Winkel $\gamma_1$ des Spannungszeigers wird vorteilhaft direkt aus den Werten des Motor-Positionsgeber MP abgeleitet.

Müssen die Leistungsschalter B1-B6 zu einem Zeitpunkt reaktiviert werden, zu dem z.B. aufgrund mangelnder Auflösung des Gebers keine exakte Winkellage vorliegt, so muß die aktuelle Winkellage geschätzt werden. Zu diesem Zweck wird die Winkellage $\gamma_R$ ausgehend von der letzten Geberinformation extrapoliert. Die Extrapolation wird durchgeführt unter Verwendung der letzten vom Geber erhaltenen Winkellage, der Zeitdifferenz zur letzten Geberinformation und der aktuellen Rotordrehzahl. Eine vorteilhafte Ausführung dieser Extrapolationsrechnung bezieht auch noch die aktuelle Rotorbeschleunigung mit ein.

Beim Verfahren der feldorientierten Regelung der Synchronmaschine liefert nun die vorgenannte Bestimmung des Rotorwinkels $\gamma_R$ die Lage der d-Achse (feldbildende Achse) des feldorientierten Koordinatensystems. Den Winkel des einzustellenden Spannungszeigers erhält man, wenn man zur gemessenen Lage der $\gamma_R$ d-Achse den von den beiden Spannungskomponenten $u_{1d}$ und $U_{1q}$ aufgespannten Winkel $\gamma_u$ addiert.

$$\gamma_1 = \gamma_R + \gamma_u$$

wobei $\gamma_u$ gegeben ist durch

$$\gamma_u = \arctan \frac{u_d}{u_q}$$

## Patentansprüche

1. Antriebsvorrichtung für ein Elektrofahrzeug

   - mit einer im Motorbetrieb und im Generatorbetrieb sowie im Leerlaufbetrieb betreibbaren permanenterregten Synchronmaschine (M);
   - mit einer im Motorbetrieb die Synchronmaschine (M) speisenden bzw. im Generatorbetrieb aus der Synchronmaschine (M) speisbaren Batterie (B);
   - mit einem Umrichter (U) in der Verbindung zwischen der Batterie (B) und der Synchronmaschine (M);
   - mit einer Aktivierung der Leistungsschalter (B1-B6) des Umrichters im Leerlaufbetrieb der Synchronmaschine (M) bei einer aufgrund der in den Wicklungen der Synchronmaschine induzierten Klemmenspannungen ($U_{K12};U_{K23};U_{K31}$) die Batteriespannung ($U_B$) unzulässig übersteigenden Rückspeise-Gleichspannung ($U_{ZW}$);
   - mit einer Aktivierung im Sinne einer Anpassung der Rückspeise-Gleichspannung ($U_{ZW}$) an die Batteriespannung ($U_B$) durch Einprägung eines entsprechenden Magnetisierungsstromes für die Synchronmaschine;
   - mit einer den Stromfluß sperrenden Inaktivierung der Leistungsschalter (B1-B3) des Umrichters (U) im sonstigen Leerlaufbetrieb der Synchronmaschine.

2. Antriebsvorrichtung nach Anspruch 1

   - mit einer permanenterregten Synchronmaschine (M) als alleinigem Antrieb für das Elektrofahrzeug.

3. Antriebsvorrichtung nach Anspruch 1

   - mit einer permanenterregten Synchronmaschine (M) als paralleler Antrieb zu einem Verbrennungsmotor ($V_B$) für ein Elektrofahrzeug, insbesondere für ein Hybridfahrzeug.

4. Antriebsvorrichtung nach zumindest einem der Ansprüche 1-3

   - mit einer die Leistungsschalter des Umrichters inaktivierenden bzw. aktivierenden Steuereinheit (CB);
   - mit einer Steuerabhängigkeit der Steuereinheit (CB) von einer Meßvorrichtung (MR) für die Rotordrehzahl der Synchronmaschine (M) bzw. von einer Meßvorrichtung (MI) für die Motorströme ($I_1;I_2;I_3$) der Synchronmaschine (M) sowie von einer Meßvorrichtung (MU) für die Rückspeise-Gleichspannung ($U_{ZW}$) am batterieseitigen Ausgang des Umrichters (U).

5.  Antriebsvorrichtung nach zumindest einem der Ansprüche 1-4

    -   mit einer Inaktivierung der Leistungsschalter (B1-B6) des Umrichters (U) in Abhängigkeit von einem Null-Sollwert für die drehmomentbildenden Motorströme ($I_1$;$I_2$;$I_3$) des Synchronmotors.

6.  Antriebsvorrichtung nach zumindest einem der Ansprüche 1-5

    -   mit einer Bestimmung der induzierten Klemmenspannungen ($U_{K12}$;$U_{K23}$;$U_{K31}$) aufgrund der jeweiligen Rotordrehzahl sowie des jeweiligen Flußistwerts der Synchronmaschine (M).

7.  Antriebsvorrichtung nach zumindest einem der Ansprüche 1-6

    -   mit einer Bestimmung der jeweiligen Rückspeise-Gleichspannung ($U_{ZW}$) aufgrund der induzierten Klemmenspannungen ($U_{K12}$;$U_{K23}$;$U_{K31}$) sowie der Spannungsabfälle an dem Umrichter (U), insbesondere an den Freilaufdioden der Leistungsschalter (B1-B6).

8.  Antriebsvorrichtung nach zumindest einem der Ansprüche 1-7

    -   mit einer Reaktivierung der Leistungsschalter (B1-B6) im Sinne einer ruckfreien Wiederbeschleunigung der Synchronmaschine (M) durch feldorientierte Regelung mit Vorgabe eines entsprechenden Spannungszeigers ($u_1$) der Ständerspannung der Synchronmaschine (M) in Abhängigkeit von einer Stromsollwertvorgabe und der augenblicklichen Rotordrehzahl ($\omega_R$) und Winkellage ($\gamma_R$) des Rotorfeldes der Synchronmaschine (M).

9.  Antriebsvorrichtung nach Anspruch 8

    -   mit einer Bestimmung des jeweiligen Spannungszeigers durch Pulsweitenmodulation (PWM) nach dem Prinzip der sogenannten Raumzeigermodulation.

10. Antriebsvorrichtung nach Anspruch 8 und/oder 9

    -   mit einer Bestimmung des Betrages ($u_1$) des jeweiligen Spannungszeigers ($\mu_1$) mit Hilfe eines abgespeicherten Maschinenmodells der Synchronmaschine und der augenblicklichen Rotordrehzahl ($\omega_R$).

$\underline{U}$

B1  B2  B3

$I_B$

$U_B$

$U_{ZW}$

B  C

B4  B5  B6

$U_{k31}$

$I_1$

$U_{k12}$

$U_{k23}$

$I_3$  $I_2$

M

PM

VB

R1  R2

MU  T  MI  MR  MP

PWM

CAN

UV

CB

EP 0 906 847 A2